**Europäisches Patentamt**

(19) **European Patent Office**

**Office européen des brevets**

(11) Numéro de publication: **0 120 782**
**B1**

(12) # FASCICULE DE BREVET EUROPÉEN

(45) Date de publication du fascicule du brevet:
**13.08.86**

(21) Numéro de dépôt: **84400585.0**

(22) Date de dépôt: **22.03.84**

(51) Int. Cl.⁴: **F 16 L 41/04**

(54) Procédé et dispositif de création d'un piquage en atmosphère controlée sur une tuyauterie, notamment une tuyauterie de centrale nucléaire.

(30) Priorité: **24.03.83 FR 8304838**

(43) Date de publication de la demande:
**03.10.84 Bulletin 84/40**

(45) Mention de la délivrance du brevet:
**13.08.86 Bulletin 86/33**

(84) Etats contractants désignés:
**BE CH DE GB IT LI NL SE**

(56) Documents cité:
**GB-A-184 106**
**US-A-3 585 699**
**US-A-4 234 006**

(73) Titulaire: **ELECTRICITE DE FRANCE Service National, 2, rue Louis Murat, F-75008 Paris (FR)**

(72) Inventeur: **Dohlen, Gérard, Rue du Château d'eau, F-77250 Ecuelle (FR)**
Inventeur: **Le Marquis, Jean- Claude, 29, rue de la République, F-77250 Moret sur Loing (FR)**
Inventeur: **Oberlin, Claude, 24, rue du Général de Gaulle, F-77210 Avon (FR)**

(74) Mandataire: **Schrimpf, Robert, Cabinet Regimbeau 26, Avenue Kléber, F-75116 Paris (FR)**

LIBER, STOCKHOLM 1986

## Description

La présente invention concerne un procédé de création d'un piquage en atmosphère contrôlée sur une tuyauterie, notamment une tuyauterie de centrale nucléaire, ainsi qu'un dispositif pour sa mise en oeuvre.

Par "piquage", on entendra une prise latérale réalisée sous forme d'une tubulure (de section circulaire ou rectangulaire) borgne de courte longueur et de diamètre très inférieur à celui de la conduite, orientée perpendiculairement par rapport à l'axe de cette conduite (voir par exemple US-A-4 234 006). Cette prise latérale est utilisée lors des interventions sur la conduite: on ouvre le piquage par découpe de la tubulure, ce qui permet de passer à l'intérieur de la conduite toutes sortes d'appareils, tant pour la réparation et l'entretien (et notamment des ballons obturateurs souples assurant, après gonflage à l'intérieur de la conduite, l'étanchéité du circuit vis-à-vis de l'extérieur) que pour le contrôle de l'intégrité de la conduite (contrôle gammagraphique en particulier).

Jusqu'à présent, ces piquages étaient prévus au moment de la conception de l'installation en des emplacements appropriés, et réalisés en même temps que celle-ci. La création d'un piquage additionnel sur une conduite préexistante supposait des travaux de grande ampleur et de longue durée pour pouvoir isoler, vidanger, refroidir et démonter la partie de l'installation à modifier.

Un des buts de l'invention est de permettre la création d'un tel piquage sans pour autant exiger un arrêt de longue durée de l'installation, grâce notamment à la possibilité de maintenir pendant, avant et après l'intervention les circuits sous atmosphère contrôlée de gaz neutre (par exemple sous atmosphère d'argon), et d'intervenir alors que les circuits sont encore en température, c'est-à-dire à des valeurs pouvant atteindre 180°C.

Ces propriétés permettent en particulier des interventions rapides sur les circuits sodium des centrales nucléaires, interventions qui étaient impossibles précédemment après la première mise en service de l'installation, sauf à entreprendre des travaux de grande ampleur.

Pour cela, le procédé de l'invention comprend les étapes de:

. creusement dans la paroi de la conduite, à l'emplacement du piquage à réaliser, d'une gorge continue de profondeur légèrement inférieure à l'épaisseur de la paroi, de manière à laisser subsister au fond de la gorge un voile de métal entre l'intérieur de la tuyauterie et l'atmosphère extérieure;

. mise en place sur la tuyauterie d'un organe d'isolation étanche, tel une boîte à gants, recouvrant une zone d'étendue au moins égale à celle de la zone délimitée par la gorge;

. défonçage du voile de métal de manière à pratiquer une ouverture dans la conduite;

. retrait de la fraction découpée de la paroi;

. soudage d'une conduite borgne de piquage;

. retrait de l'organe d'isolation étanche.

De préférence, le soudage de la conduite borgne de piquage se fait par soudage d'un manchon tubulaire, suivi d'une obturation de ce manchon par soudage d'un couvercle.

De préférence, après défonçage du voile de métal, on introduit et on déploie à l'intérieur de la conduite un dispositif récupérateur de débris d'usinage, qui sera fermé et retiré avant obturation du manchon tubulaire.

Le dispositif récupérateur peut également être prévu pour définir et isoler de manière étanche une zone de travail située au voisinage de l'ouverture, et en partie comprise à l'intérieur de la conduite. Dans ce cas, l'organe d'isolation étanche peut être avantageusement retiré pendant toute la durée des opérations effectuées avec le dispositif récupérateur en place.

Pour le creusement de la gorge, l'invention propose également un dispositif comprenant: un outil de découpe apte à creuser une gorge à l'emplacement du piquage à réaliser; des moyens de réglage de profondeur de l'outil de découpe; des moyens palpeurs aptes à suivre la surface de la conduite au voisinage de l'outil de découpe et coopérant avec les moyens précédents de manière à ajuster la profondeur de découpe à une valeur légèrement inférieure à l'épaisseur de la paroi et laisser subsister au fond de la gorge un voile de métal d'épaisseur constante en tout point de la gorge, ainsi que des moyens pour déplacer l'outil de découpe le long d'un tracé préétabli correspondant à la découpe à réaliser.

L'invention propose également un dispositif de défonçage comportant: un support prenant appui en totalité sur la zone de la paroi de conduite située à l'extérieur de la zone définie par la gorge; un gabarit de découpe, posé sur le support, portant une rainure de guidage placée au-dessus de la gorge et au droit de celle-ci, ainsi qu'un outil de défonçage guidé par la rainure du gabarit. Avantageusement, le dispositif de creusement de gorge et le dispositif de défonçage sont guidés ou soutenus par un support de centrage d'outil préalablement soudé, au centre de la zone où doit être pratiquée l'ouverture, sur la paroi de la conduite. Ce support de centrage permet en outre, au moment du défonçage de la paroi, de saisir la fraction découpée de la paroi et d'éviter qu'elle ne tombe à l'intérieur de la conduite.

L'invention propose également un dispositif de défonçage d'une autre forme tel que défini dans la revendication 8.

D'autres caractéristiques et avantages de l'invention apparaîtront à la lecture de la description détaillée ci-dessous, faite en référence aux dessins annexés sur lesquels:

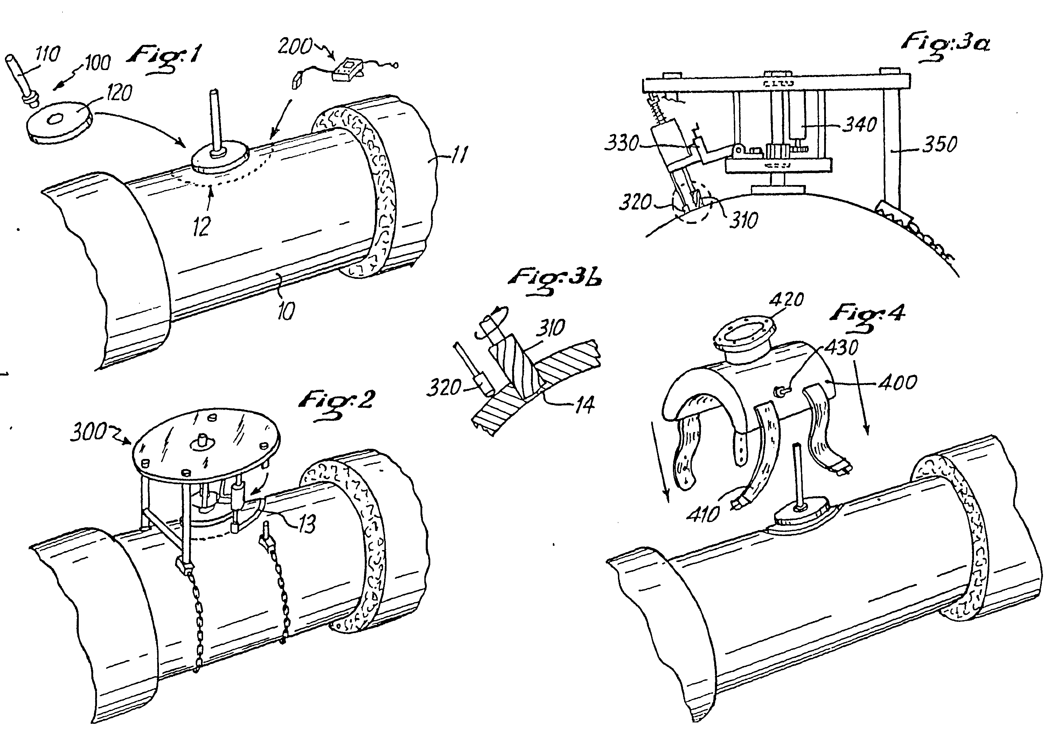

. la figure 1 illustre l'étape préalable de soudage du support d'outil,

. la figure 2 illustre l'étape de creusement de la gorge,

. les figures 3a et 3b montrent un exemple de machine de creusement de gorge utilisable pour la mise en oeuvre de cette étape du procédé,

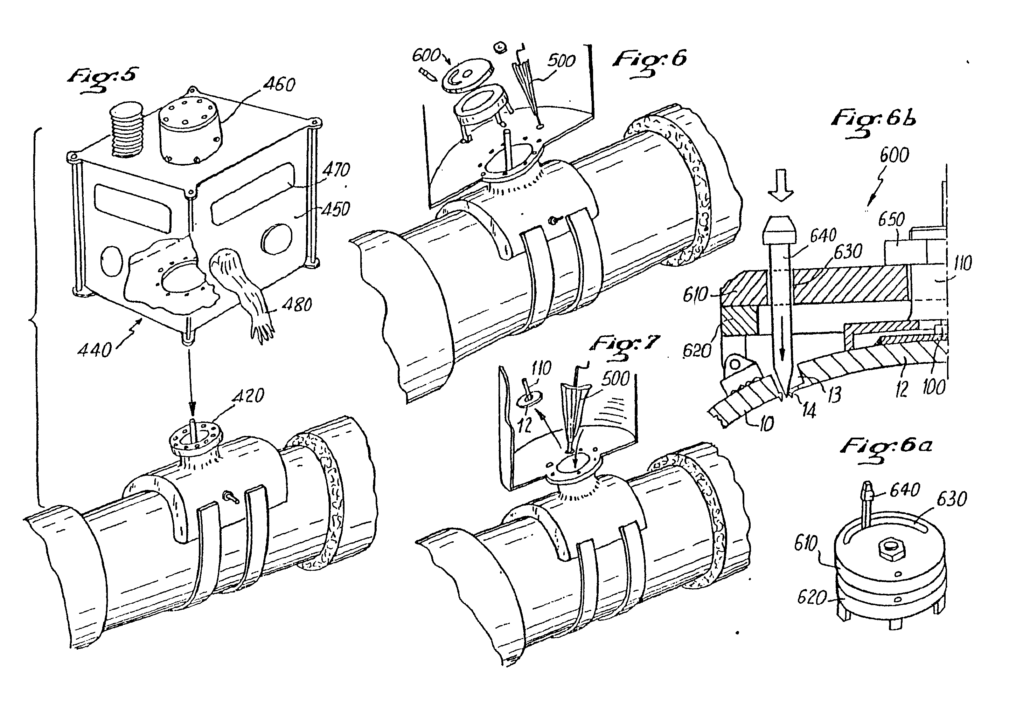

. les figures 4 et 5 illustrent la mise en place d'une boîte à gants formant organe d'isolation étanche,

. la figure 6 illustre la mise en place du dispositif de défonçage, ce dispositif étant plus particulièrement représenté sur les figures 6a et 6b,

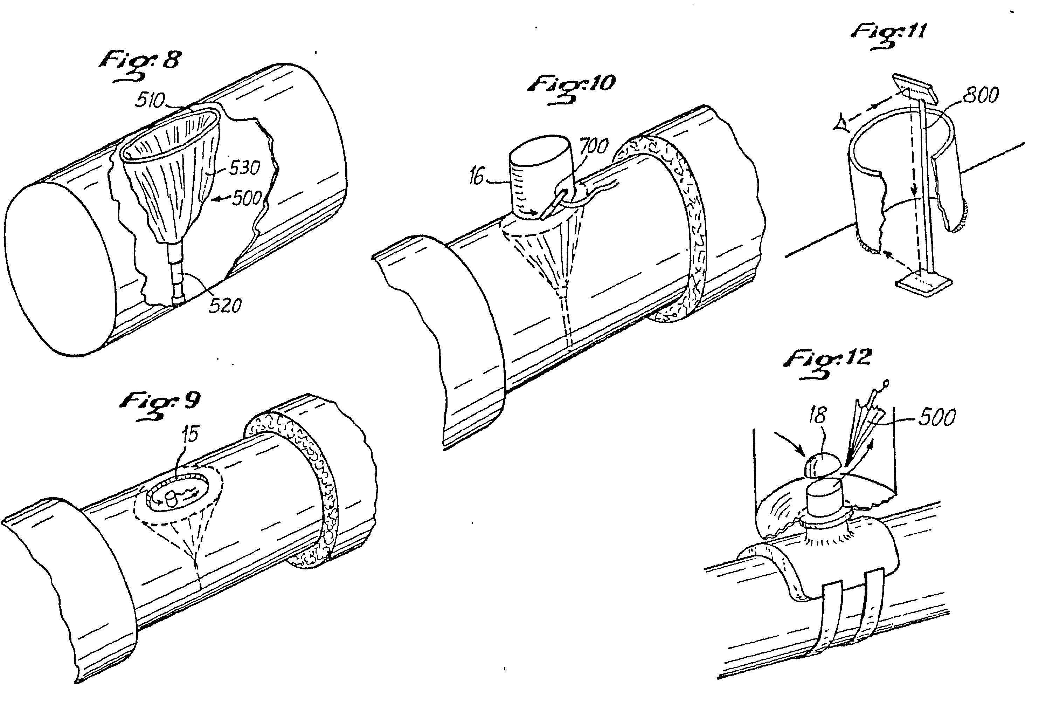

. la figure 7 illustre la sortie de la pièce défoncée et la mise en place du récupérateur de déchets,

. la figure 8 montre le récupérateur déployé à l'intérieur de la conduite,

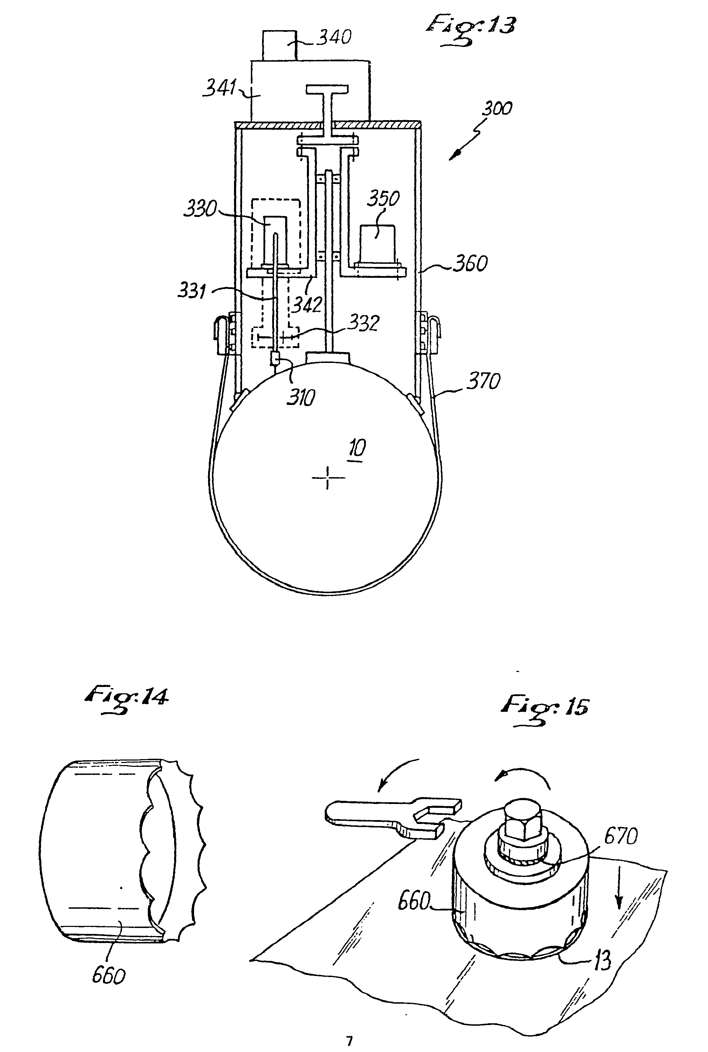

. la figure 9 illustre la réalisation du chanfrein de soudage de la tubulure de piquage,

. la figure 10 illustre le soudage de cette tubulure,

. la figure 11 illustre l'observation visuelle de la soudure envers de la tubulure,

. la figure 12 illustre, une fois la boîte à gants remise en place, l'étape finale de retrait du récupérateur et de soudage de la calotte de fermeture du piquage,

. la figure 13 montre en détail un exemple de réalisation d'une machine de creusement de gorge pour pratiquer une ouverture circulaire,

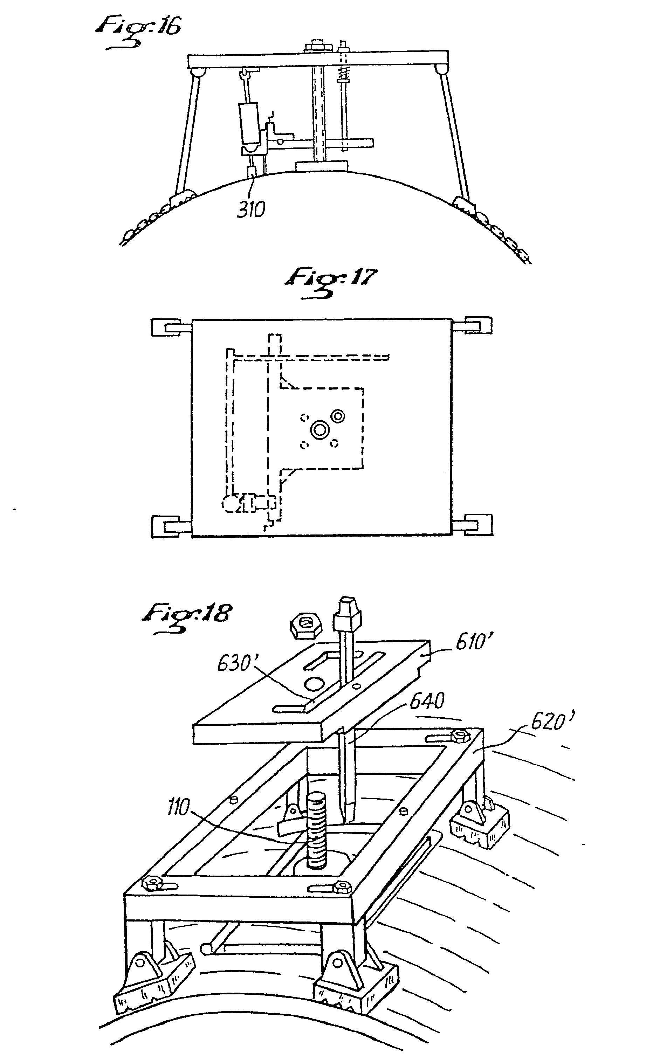

. les figures 14 et 15 montrent une variante du dispositif de défonçage permettant d'effectuer cette opération sur une ouverture circulaire,

. les figures 16 et 17 sont des vues, respectivement de face et en plan, d'une machine de creusement de gorge pour la découpe d'un piquage de section rectangulaire,

. la figure 18 est une vue perspective d'un dispositif permettant le défonçage de cette ouverture de section rectangulaire.

Sur la figure 1, on peut voir la partie de conduite 10 de laquelle a été retiré le calorifugeage 11 qui, en temps normal, protège thermiquement l'ensemble des circuits. La référence 12 désigne la zone où doit être implanté le piquage.

Sensiblement au centre de cette zone est soudé le support de centrage d'outil 100 composé par exemple d'une tige 110 vissée au centre d'un plateau 120 à souder sur la paroi de la conduite.

Au moyen d'un dispositif 200, l'opérateur mesure par ultrasons l'épaisseur de la conduite dans la zone à découper.

Il peut alors mettre en place (figure 2) la machine 300 de creusement de gorge, supportée par la tige 110. Cette machine est alors réglée pour usiner en profondeur la gorge 13 de manière à laisser un voile de métal 14 (visible figure 3b) de quelques dixièmes de millimètre d'épaisseur.

La figure 3a (avec le détail agrandi figure 3b) montre schématiquement la structure de cette machine: elle comprend un outil de découpe 310, par exemple une fraise cylindrique permettant de creuser la gorge. Il est prévu des moyens 330 de réglage de profondeur de cette fraise, la position de la surface de la conduite étant déterminée par exemple par un palpeur 320. Il est ainsi possible de suivre la surface de la conduite au voisinage de la fraise 310 sur tout le trajet de découpe, et bien que celui-ci suive un profil gauche (correspondant, dans le cas d'un piquage par tubulure circulaire, à l'intersection de deux cylindres). Il est également prévu des moyens 340 pour déplacer l'outil de découpe le long d'un tracé préétabli correspondant à la découpe à réaliser, par exemple un tracé circulaire, vu en plan.

Une fois la gorge entièrement réalisée, l'opérateur retire la machine de perçage et met en place sur la conduite un organe d'isolation étanche apte à isoler l'orifice de l'atmosphère extérieure, une fois celui-ci réalisé. Cet organe d'isolation est par exemple constitué d'une boîte à gants permettant à l'opérateur de travailler librement tout en assurant l'isolation. Cette boîte à gants peut par exemple être assujettie à une embase gonflable 400 (figure 4) épousant la forme extérieure de la conduite et fixée à celle-ci au moyen de sangles 410. L'embase supporte une bride 420 permettant la fixation de la boîte à gants. De préférence, l'embase est un joint gonflable par insufflation de gaz sous pression par la valve 430.

La boîte à gants proprement dite 440 (figure 5) est ensuite fixée de manière étache sur la bride 420. Il s'agit par exemple d'une enceinte de forme parallélépipédique ou cylindrique 450 en élastomère armé pourvue d'un sas 460 d'introduction des outils, de hublots 470 et de gants 480 pour l'opérateur.

Dans cette boîte à gants est introduit le dispositif récupérateur de débris 500 et le dispositif de défonçage final 600 (figure 6).

. Le dispositif de récupération assure, une fois déployé à l'intérieur de la conduite en dessous de l'orifice, non seulement la récupération des copeaux et autres débris occasionnés par les opérations d'usinage sur cet orifice, mais encore l'étanchéité entre l'intérieur de la conduite et l'atmosphère extérieure. Il est ainsi possible de réaliser à l'air libre toutes opérations, y compris les soudures avec reprise envers, sur l'orifice ouvert dans la conduite.

L'ouverture de cet orifice est réalisée par le dispositif de défonçage final 600 représenté figures 6a et 6b: ce dispositif soutenu et guidé par le support 100, comprend un gabarit de découpe 610 posé sur un support 620 prenant appui en totalité sur la zone de la paroi de la conduite située à l'extérieur de la zone définie par la gorge. Le gabarit comporte une rainure de guidage 630, au droit de la gorge, permettant de guider un outil de défonçage 640. Dans l'exemple représenté où il s'agit de pratiquer une ouverture circulaire, la rainure 630 est pratiquée sur une fraction de cercle, et l'opérateur fait tourner le gabarit 610 au fur et à mesure que les portions de circonférence sont défoncées.

Du fait de la très faible épaisseur du voile subsistant au fond de la gorge, le défonçage se fait sans production de copeaux (donc sans introduction de corps étrangers dans la conduite) et sans déformation de la paroi métallique de la conduite.

Une fois le défonçage achevé, la fraction centrale de la paroi, découpée, reste retenue par la tige 110 du support d'outil; en effet, cette tige reste reliée, par exemple par un écrou 650, au support 620 du dispositif de défonçage: on évite ainsi que, à la fin du défonçage, la fraction découpée ne tombe au fond de la conduite.

Au moment du démontage du dispositif de défonçage, l'opérateur retire cette fraction 12 par la tige 110, et introduit le dispositif récupérateur 500 à l'intérieur de la conduite, désormais ouverte.

La figure 8 montre ce dispositif déployé à l'intérieur de la conduite: un joint gonflable 510, plaqué à l'intérieur de la conduite, autour de l'orifice, par un pied télescopique 520, assure la fixation étanche d'un voile souple 530 récupérant les débris et assurant l'isolation de l'intérieur de la conduite, qui peut être maintenu sous atmosphère contrôlée de gaz neutre.

Un chanfrein 15 est ensuite pratiqué (figure 9) sur l'orifice pour permettre le soudage d'un manchon tubulaire 16 (figure 10) au moyen d'une torche 700, de manière classique.

La soudure est observée, notamment sa partie envers, au moyen d'un dispositif à miroirs 800 (figure 11), puis contrôlée par gammagraphie.

La boîte à gants est alors remise en place, le dispositif récupérateur 500 retiré de la conduite (figure 12) et une calotte d'obturation 18 soudée à l'extrémité du manchon. Cette soudure est de préférence réalisée sans métal d'apport, par un dispositif à électrode réfractaire (soudage TIG).

La boîte à gants est alors retirée et le calorifugeage remis en place.

La figure 13 montre une variante d'une machine de creusement de gorge, toujours dans le cas d'un perçage circulaire, dans laquelle l'outil de fraisage 310 est supporté par une tige 331, de préférence une tige carrée interdisant toute rotation axiale. L'outil est amené en affleurement de la surface de la conduite par un vernier 332. C'est ensuite un vérin 330, par exemple un vérin double corps assurant une faible force de pression mais une précision importante, qui commandera la descente contrôlée de l'outil à la profondeur voulue. Un codeur 350 assure la transmission de l'information de profondeur au vérin 330.

Un moteur 340, associé à un réducteur 341 entraînant le support 342 d'outil, entraîne celui-ci le long du tracé préétabli.

L'ensemble de la machine peut par exemple être supporté par un bâti 360 fixé à la conduite 10 au moyen de sangles 370 entourant celle-ci.

Les figures 14 et 15 montrent une autre possibilité d'outil de défonçage pour une ouverture circulaire: l'outil se compose alors d'um perforateur denté 660 mobile autour de la tige 110 soudée au centre de la zone à découper, par exemple au moyen d'une butée à billes 670. Il suffit alors à l'opérateur de placer ce perforateur au-dessus de la gorge 13 et d'effectuer de légères percussions sur celui-ci pour défoncer, sans production de copeaux, le voile de métal. La percussion peut être également remplacée par un système mécanique à vibreur.

Les figures 16 à 18 se réfèrent au perçage d'un trou non pas circulaire, mais rectangulaire en plan: les figures 16 et 17 montrent une variante de la machine de perçage. La gorge se composant de deux parties rectilignes et deux parties en forme d'arc de cercle, l'inclinaison de l'outil 310 par rapport à la surface de la conduite reste constante, ce qui en facilite le guidage pendant le suivi du tracé.

La figure 18 montre un dispositif de défonçage pour découpe rectangulaire, analogue au dispositif des figures 6a et 6b prévu pour une gorge circulaire: le dispositif comporte également un gabarit 610' posé sur un socle 620'. La rainure 630' de guidage de l'outil 640 présente alors un profil rectiligne. La tige 110 du support d'outil assure comme précédemment le centrage des différentes pièces.

**Revendications**

1. Procédé de création d'un piquage en atmosphère contrôlée sur une tuyauterie, notamment une tuyauterie (10) de centrale nucléaire, caractérisé en ce qu'il comprend les étapes de:
. creusement dans la paroi de la conduite, à l'emplacement du piquage à réaliser, d'une gorge continue (13) de profondeur légèrement inférieure à l'épaisseur de la paroi, de manière à laisser subsister au fond de la gorge un voile (14) de métal entre l'intérieur de la tuyauterie et l'atmosphère extérieure;
. mise en place sur une tuyauterie d'un organe d'isolation étanche (400, 440), tel une boîte à gants, recouvrant une zone d'étendue au moins égale à celle de la zone délimitée par la gorge;
. défonçage du voile de métal de manière à pratiquer une ouverture dans la conduite;
. retrait de la fraction (12) découpée de la paroi;
. soudage d'une conduite borgne (16, 18) de piquage;
. retrait de l'organe d'isolation étanche.

2. Procédé selon la revendication 1, caractérisé en ce que le soudage de la conduite borgne de piquage se fait par:
. soudage d'un manchon tubulaire (16),
. obturation de ce manchon par soudage d'un couvercle (18).

3. Procédé selon la revendication 2, caractérisé en ce qu'il comporte en outre les étapes suivantes:
. après défonçage du voile de métal, introduction et déploiement à l'intérieur de la conduite d'un dispositif récupérateur (500) de débris d'usinage.
. avant obturation du manchon tubulaire, fermeture et retrait de ce dispositif récupérateur.

4. Procédé selon la revendication 3, caractérisé en ce que l'organe d'isolation étanche est retiré pendant les opérations effectuées, le dispositif récupérateur en place, ce dispositif étant également apte à définir et isoler de manière étanche une zone de travail située au voisinage de l'ouverture, en partie comprise à l'intérieur de la conduite.

5. Procédé selon l'une des revendications 1 à 4, caractérisé en ce qu'il comprend une étape préalable de soudage, au centre de la zone où doit être pratiquée l'ouverture, d'un support (100) de centrage d'outil et de préhension de la fraction découpée de la paroi.

6. Dispositif (300) pour la mise en oeuvre de l'opération de creusement de gorge du procédé selon l'une des revendications 1 à 5, caractérisé en ce qu'il comprend:
. un outil de découpe (310) apte à creuser une gorge à l'emplacement du piquage à réaliser,
. des moyens (330) de réglage de profondeur de l'outil de découpe,
. des moyens (320) palpeurs aptes à suivre la surface de la conduite au voisinage de l'outil de découpe, et coopérant avec les moyens précédents de manière à ajuster la profondeur de découpe à une valeur légèrement inférieure à l'épaisseur de la paroid pour laisser subsister au fond de la gorge (13) un voile de métal d'épaisseur constante en tout point de la gorge,
. des moyens (340) pour déplacer l'outil de découpe le long d'un tracé préétabli correspondant à la découpe à réaliser.

Dispositif (600) pour la mise en oeuvre de l'opération de défonçage du procédé selon l'une des revendications 1 à 5, caractérisé en ce qu'il comporte:
. un support (620), prenant appui en totalité sur la zone de la paroi de conduite située à l'extérieur de la zone définie par la gorge (13),
. un gabarit (610) de découpe, posé sur le support, portant une rainure de guidage (630) placée au-dessus de la gorge, au droit de celle-ci,
. un outil de défonçage (640), guidé par la rainure du gabarit.

8. Dispositif pour la mise en oeuvre de l'opération de défonçage du procédé selon la revendication 5 pour la découpe d'une ouverture circulaire, caractérisé en ce qu'il comprend un perforateur dentelé (660) de même diamètre que l'ouverture à pratiquer, soutenu par le support de centrage d'outil (100) et mobile par rapport à celui-ci.

## Claims

1. A method of tapping a pipeline in a controlled atmosphere, particularly a nuclear plant pipeline, characterised in that it comprises the steps of:
cutting out in the wall of the duct, at the positionof the tapping to be made, a continuous groove (13) of a depth slightly less than the thickness of the wall, in a manner to leave at the bottom of the groove a skin (14) of metal between the inside of the pipeline and the outside atmosphere;
placing on the pipeline a tight isolation member (400, 440), such as a box with gloves, covering a zone of size at least equal to that of the zone delimited by the groove;
breaking the skin of metal in a manner to cause an opening into the duct;
withdrawing the part (12) cut from the wall;
welding of a blind tapping duct (16, 18);
withdrawal of the tight isolation member.

2. A method according to claim 1, characterised in that the welding of the blind tapping duct is carried out by:
welding of a tubular sleeve (16),
closing of this sleeve by welding of a lid (18).

3. A method according to claim 2, characterised inthat it has in addition the following stages:
after breaking of the skin of metal, introductionand deployment inside the duct of a machining debris recovery device (500),
after closing of the tubular sleeve, closing and withdrawal of this recovery device.

4. A method according to claim 3, characterised in that the tight isolation member is withdrawn during the operations carried out, the recovery device being in position, this device being also able to define and isolate in a tight manner a work zone situated in the region of the opening, partly comprised inside the duct.

5. A method according to any one of claims 1 to 4, characterised in that it comprises a preliminary stage of welding at the centre of the zone where the opening is to be carried out, of a support (100) for centring of a tool and gripping of the part cut from the wall.

6. Apparatus (300) for carrying out the operation of cutting out of a groove of the method according to any one of claims 1 to 5, characterised in that it comprises:
a cutting tool (310) able to cut out a groove at theposition of the tapping to be made,
means (330) for adjusting the depth of the cutting tool,
feeler means (320) adapted to follow the surface of the duct in the region of the cutting tool, and cooperating with the preceding means in a manner to adjust the depth of cut to a value slightly less than the thickness of the wall for leaving at the bottom of the groove (13) a skin of metal (14) of a constant thickness at all points of the groove,
means (340) for displacing the cutting tool along the length of a pre-established plot corresponding to the cut to be made.

7. A device (600) for carrying out the operation of breaking of the method according to any one of claims 1 to 5, characterised in that it has:
a support (620) abutting entirely on the zone of thewall of the duct situated outside the zone defined by the groove (13),
a cutting template (610), positioned on the support, carrying a guide slot (630) placed above the groove, in line with it,

a breaking tool (640) guided by the slot of the template.

8. A device for carrying out the operation of breaking of the method according to claim 5 for the cutting of a circular opening, characterised in that it comprises a jagged perforator (660) of the same diameter as the opening to be made, supported by the tool centring support (100) and movable with respect to this.

**Patentansprüche**

1. Verfahren zur Herstellung einer Rohrabzweigung bei kontrollierter Atmosphäre an einem Rohrsystem, insbesondere einem Rohrsystem eines Kernkraftwerks, dadurch gekennzeichnet, daß es die Schritte umfaßt: Ausbilden einer fortlaufenden, etwas weniger als wanddick tiefen Nut (13), in der Leitungswand am Ort der durchzuführenden Rohrabzweigung, so daß auf dem Grund der Nut eine dünne Metallschicht (14) zwischen dem Inneren des Rohrsystems und der äußeren Atmosphäre bestehenbleibt; Anordnung eines dichten Isolationsteils (400, 440), wie eines Handschuhkastens, auf dem Rohrsystem, welches Isolationsteil einen Bereich bedeckt, der wenigstens so groß wie derjenige Bereich ist, der von der Nut begrenzt wird; Aufreißen der dünnen Metallschicht, so daß eine Öffnung in der Leitung durchgeführt wird; Wegnehmen des aus der Wand ausgeschnittenen Bruchteils (12); Anschweißen einer blinden Rohrabzweigungsleitung (16, 18); Wegnehmen des dichten Isolationsteils.

2. Verfahren nach Anspruch 1, dadurch gekennzeichnet, daß das Anschweißen der blinden Rohrabzweigungsleitung stattfindet durch: Anschweißen eines ringförmigen Stutzens (16), Abdichten des Stutzens durch Anschweißen einer Abdeckung (18).

3. Verfahren nach Anspruch 2, dadurch gekennzeichnet, daß es ferner die folgenden Schritte umfaßt: nach Aufreißen der dünnen Metallschicht, Einführen und Ausbreiten einer Vorrichtung (500), zur Rückgewinnung von Bearbeitungsabfall, ins Innere der Leitung, vor Abdichten des ringförmigen Stutzens, Verschließen und Wegnehmen der Rückgewinnungsvorrichtung.

4. Vorrichtung nach Anspruch 3, dadurch gekennzeichnet, daß das dichte Isolationsteil während der durchgeführten Arbeitsvorgänge entfernt ist, mit der Rückgewinnungsvorrichtung an ihrem platz, wobei diese Vorrichtung gleichermaßen geeignet ist einen Arbeitsbereich, der in der Nähe der Öffnung angeordnet und teilweise im Innern der Leitung enthalten ist, festzulegen und dicht zu isolieren.

5. Verfahren nach einem der Ansprüche 1 bis 4, gekennzeichnet durch einen vorausgehenden Schritt des Anschweißens eines Trägers (100) zur Zentrierung des Werkzeugs und zum Greifen des aus der Wand ausgeschnittenen Teils, in der Mitte des Bereichs, wo die Öffnung durchgeführt werden soll.

6. Vorrichtung (300) zur Durchführung des Arbeitsgangs der Nutausbildung des Verfahrens nach einem der Ansprüche 1 bis 5, dadurch gekennzeichnet, daß sie umfaßt: ein Schneidewerkzeug (310), welches an der Stelle, wo die Rohrabzweigung ausgeführt werden soll, eine Nut ausbilden kann, Einrichtungen (330) zur Einstellung der Tiefe des Schneidewerkzeugs, Fühlereinrichtungen (320), welche der Oberfläche der Leitung in der Nähe des Schneidewerkzeugs folgen können, und mit den vorigen Einrichtungen so zusammenwirken können, daß die Tiefe des Schneidewerkzeugs auf einen Wert justiert wird, der geringfügig unterhalb der Dicke der Wand liegt, um am Boden der Nut (13) eine dünne Metallschicht (14), mit auf der ganzen Nut konstanter Dicke, bestehenzulassen, Einrichtungen (340), zur Verschiebung des Schneidewerkzeugs längs einer vorherbestimmten Linie, welche dem auszuführenden Schnitt entspricht.

7. Vorrichtung (600) zur Durchführung des Aufreiß-Arbeitsgangs des Verfahrens nach einem der Ansprüche 1 bis 5, dadurch gekennzeichnet, daß sie umfaßt: einen Träger (620), welcher sich insgesamt auf den Bereich der Leitungswand stützt, der außerhalb des Bereiches angeordnet ist, welcher durch die Nut (13) bestimmt wird, eine Schneideschablone (610), welche auf dem Träger angeordnet ist, und einen über der Nut plazierten, mit dieser ausgerichteten, Führungsschlitz (630) aufweist, ein Aufreißwerkzeug (640), welches durch den Schlitz der Schablone geführt wird.

8. Aufreißvorrichtung zur Durchführung des Aufreiß-Arbeitsgangs des Verfahrens nach Anspruch 5 zum Schneiden einer ringförmigen Öffnung, dadurch gekennzeichnet, daß sie eine gezahnte Perforiereinrichtung (660), vom gleichen Durchmesser wie die auszuführende Öffnung, aufweist, welche von dem Träger zur Zentrierung des Werkzeugs (100) gestützt wird und im Verhältnis zu diesem beweglich ist.

Fig.3a

350

340

310

330

320

Fig.4

400

420

430

410

Fig.3b

310

14

320

Fig.1

11

200

10

12

100

110

120

Fig.2

13

300

1

Fig:5

460

470

450

480

440

420

Fig:6

600

500

Fig:6b

600

640

630

650

610

620

13

12

100

110

14

10

Fig:7

110

12

500

Fig:6a

640

630

610

620

0 120 782

3

Fig. 8

510
530
500
520

Fig. 9

15

Fig. 10

16
700

Fig. 11

800

Fig. 12

18
500

0 120 782

*Fig:13*

*Fig:14*

*Fig:15*

*Fig.16*

310

*Fig.17*

*Fig.18*

630'

610'

640

620'

110